Europäisches Patentamt

European Patent Office

Office européen des brevets

(19)

(11) Veröffentlichungsnummer: **0 200 210**
**B1**

(12) **EUROPÄISCHE PATENTSCHRIFT**

(45) Veröffentlichungstag der Patentschrift: **18.07.90**

(51) Int. Cl.⁵: **B 29 C 45/17**

(21) Anmeldenummer: **86105919.4**

(22) Anmeldetag: **29.04.86**

(54) Formplatte für Kunststoff-Spritzgiesswerkzeuge.

(30) Priorität: **02.05.85 DE 3515790**

(43) Veröffentlichungstag der Anmeldung:
**05.11.86 Patentblatt 86/45**

(45) Bekanntmachung des Hinweises auf die
Patenterteilung:
**18.07.90 Patentblatt 90/29**

(84) Benannte Vertragsstaaten:
**AT BE CH FR GB IT LI LU NL SE**

(56) Entgegenhaltungen:
**DE-A-3 021 827**

**PATENT ABSTRACTS OF JAPAN, Band 9, Nr. 46
(M-360)1769r, 27. Februar 1985; & JP-A-59 185
560 (TAMAGAWA DAIKASUTO K.K.) 22-10-1984
KUNSTSTOFFE, Band 74, Nr. 9, September
1984, Seiten 409-410, München, DE; P. SPAMER
et al.: "Flexibles Fertigungszentrum für das
Spritzgiessen kleiner Serien"**

**PATENT ABSTRACTS OF JAPAN, Band 10, Nr.
187 (M-493)2243r, 2. Juli 1986; & JP-A-61 31 220
(KYOWA DENSHI SANGYO K.K.) 13-02-1986**

**PATENT ABSTRACTS OF JAPAN, Band 6, Nr.
213 (M-167)1091r, 26. Oktober 1982; & JP-A-57
117 919 (MATSUSHITA DENKO K.K.) 22-07-1982**

(73) Patentinhaber: **HASCO-Normalien Hasenclever
+ Co
Westerfelder Weg 90
D-5880 Lüdenscheid (DE)**

(72) Erfinder: **Kloss, Ulrich
Sterbecker Strasse 17
D-5880 Lüdenscheid-Heedfeld (DE)**

(74) Vertreter: **Ostriga, Harald, Dipl.-Ing. et al
Patentanwälte Dipl.-Ing. Harald Ostriga Dipl.-
Ing. Bernd Sonnet Stresemannstrasse 6-8
D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 200 210 B1

**Beschreibung**

Die Erfindung betrifft eine Formplatte entsprechend dem Oberbegriff des Patentanspruchs 1 (DE—A—3 021 827).

Formelemente, in die artikelbildende Gravuren eingearbeitet werden, müssen aus — artikelbedingt — unterschiedlichsten höherlegierten Stählen bestehen. Deshalb ist man — wie bei einer durch offenkundige Vorbenutzung bekanntgewordenen Formplatte — dazu übergegangen, die mit der Gravur versehenen Formelemente auf Einsätze zu beschränken, die häufig eine rechteckige Außenkontur aufweisen. Die gravurlose Formplatte, die auch Rahmenplatte genannt wird, kann sodann — bis auf Ausnahmefälle — aus einer Standardlegierung bestehen und weist zur Aufnahme des die Gravur tragenden Formeinsatzes lediglich eine der Außenform dieses Formeinsatzes entsprechende, zur Formtrennebene hin offene Einsenkung rechteckiger Grundform auf. Je nach Artikel- oder Werkzeuggestaltung ist es auch möglich, innerhalb einer Formplatte mehrere Einsenkungen zur Aufnahme je eines Formeinsatzes vorzusehen.

Die Herstellung derartiger Form- bzw. Rahmenplatten ist sowohl aus der Sicht des Formenbauers als auch aus der Sicht des Normalienherstellers bislang recht unbefriedigend. Hierzu muß zunächst vorausgesetzt werden, daß jeder Formeinsatz — bedingt durch die Größe des Artikels — unterschiedliche Abmessungen hat. In jedem Fall ist es aber so, daß die Einsenkung zur Aufnahme des Formeinsatzes spangebende Verformungsarbeiten (Bohren und Fräsen) mit einem solchen Zerspanungsvolumen erfordert, daß ein Spannungsverzug regelmäßig unvermeidlich ist. Aus diesem Grunde verläuft die Herstellung einer Formplatte derart, daß in die bereits plangeschliffene Ausgangsplatte zunächst die Einsenkung bzw. die Einsenkungen eingearbeitet werden, wonach — nach erneutem Planschleifen — die Systembohrungen, also insbesondere die hochgenauen Führungsbohrungen zur Aufnahme der Führungssäulen, hergestellt werden. Dies bedeutet, daß der Vorfertigungsgrad für eine Formplattennormalie, die bislang lediglich eine plangeschliffene und ansonsten nicht bearbeitete Platte von zumeist rechteckiger oder auch runder Grundform darstellt, sehr gering ist.

Das Formwerkzeug nach der eingangs erwähnten DE—A—3 021 827, von der die Erfindung ausgeht, weist zwei Gravur- bzw. Formeinsätze auf, die auswechselbar angeordnet sind, damit beim Spritzen eines neuen Formlings nicht das gesamte Formwerkzeug ausgebaut werden muß, sondern sein überwiegender Teil in der Spritzgießmaschine verbleiben kann und nur ein die Formeinsätze enthaltender Teil ausgewechselt zu werden braucht. Die Formeinsätze sind mit Hilfe von seitlich vorstehenden Spannleisten an der jeweiligen Formplatte befestigt. Jeder Formeinsatz ist individuell hinsichtlich seiner Außenabmessungen auf die jeweilige Werkzeugform abgestimmt und daran angepaßt; dabei füllt er die Aufnahme-Nut vollständig aus.

In der JP—A—59—185 560 ist eine Kunststoff-Spritzgießform mit einer über die gesamte Axiallänge einer Formplatte geführten schwalbenschwanzförmig hinterschnittenen Aufnahme-Nut beschrieben. In der Aufnahme-Nut ist ein diese gänzlich und bündig ausfüllender Einsatz auswechselbar rastgehalten.

Ausgehend von der durch die DE—A—3 021 827 bekanntgewordenen Formplatte, liegt dieser Erfindung die Aufgabe zugrunde, die bekannte Formplatte so weiterzuentwickeln, daß sie einen sehr weitgehenden Vorfertigungsgrad, also eine Normalie gestattet, die beim Formenbauer keine oder nur noch geringe Nacharbeiten erfordert. Diese Aufgabe wurde entsprechend dem Kennzeichenteil des Patentanspruchs 1 gelöst.

Nach der Erfindung kommt es weniger auf die Verwendung auswechselbarer Formeinsätze zur Erleichterung von Auf- und Abspannarbeiten an als darauf, das formplattenseitige Einbaufeld derart geschickt für den Formenbauer vorzubereiten, daß seine Tätigkeit auf ein Minimum an Vorbereitungsarbeiten beschränkt bleibt. Entsprechend der Erfindung ist es jetzt bereits dem Normalienhersteller möglich, mehrere oder nur eine zur Formtrennebene hin offene gerade Aufnahme-Nut quer über eine Breitseite einer Formplatte hinweg in die Oberfläche einzufräsen. Der Nutquerschnitt ist über die gesamte Nutlänge gleichbleibend. Zweckmäßig it der Nutquerschnitt rechteckig, so daß eine solche Aufnahme-Nut auf einfache Weise mit einem geraden Frässchnitt hergestellt werden kann. Nach Einbringen de Aufnahme-Nut kann der Normalienhersteller die Formplatte planschleifen und anschließend mit den Systembohrungen, insbesondere mit den hochgenauen Führungsbohrungen zur Aufnahme der Führungssäulen, versehen. Außerdem fertigt der Normalienhersteller Einsatz elemente, die den Nutquerschnitt bündig ausfüllen. Bei Ausbildung und Anwendung der Einsatzelemente bestehen unterschiedliche Möglichkeiten, von denen einige aufgezählt werden sollen:

Hauptaufgabe zweier in der Aufnahme-Nut voneinander distanzierter Einsatzelemente ist es hierbei, zwischen ihren sich über die Nutbreite erstreckenden Querflächen sowie gemeinsam mit dem Nutboden und außerdem mit den zwischen den beiden Einsatzelementen befindlichen Nutwandungen die Einsenkung zur Aufnahme des Formeinsatzes zu definieren. Bei durch die jeweilige Nutbreite festgelegten Breiten des Einsatzes ist die axiale Länge der Einsenkung zur Aufnahme des Formeinsatzes variabel.

Diese Variabilität kann einmal darin bestehen, daß der Normalienhersteller Einsatzelemente mit festgelegten unterschiedlichen axialen Erstreckungen bzw. Längen bereitstellt, die der Formenbauer bei der Konzeption seines Formeinsatzes berücksichtigt. Hierbei ergibt sich der Vorteil, daß die formplattenseitig vorgesehenen Formschlußaufnahmen, also z.B. Gewindebohrungen zur Aufnahme der Befestigungsschrauben und Aussparungen zur Aufnahme von Vorsprüngen der Einsatzelemente, bereits gänzlich beim Normalienhersteller vorgefertigt werden können. Der Formenbauer braucht also nur den von ihm erstellten Formeinsatz in eine standardisierte Einsenkung einzusetzen und dort auf die bisherige ihm geläufige Weise zu befestigen.

Eine andere Variante, bei welcher ebenfalls die formplattenseitigen Formschlußaufnahmen in einer bestimmten Teilung, al beispielsweise jeweils an den beid Enden der Aufnahme-Nut, vorgesehen sein können, bestehen darin: Jedes Einsatzelement weist eine axiale Überlänge auf, so daß der Formenbauer in Anpassung an die von ihm geforderte individuelle axiale Länge seines Formeinsatzes lediglich ein Einsatzelement oder beide Einsatzelemente zu kürzen braucht.

.Schließlich läßt die Erfindung eine Aufnahme-Nut ohne Formschlußaufnahmen zu, so daß es in bestimmten Anwendungsfällen dem Formenbauer vorbehalten sein kann, in Anpassung an seinen Formeinsatz die formplattenseitigen Formschlußaufnahmen, die aufgrund ihres geringen Zerspanungsvolumens keine schädlichen Verzugsspannungen hervorrufen, selbst herzustellen.

In den Zeichnungen ist ein bevorzugtes Ausführungsbeispiel entsprechend der Erfindung näher dargestellt, es zeigen

Fig. 1 eine Draufsicht auf eine Formplatte, von der Formtrennebene her gesehen,

Fig. 2 einen axialen Längsschnitt entsprechend der in Fig. 1 eingetragenen und mit II—II bezeichneten abgeknickten Schnittlinie und

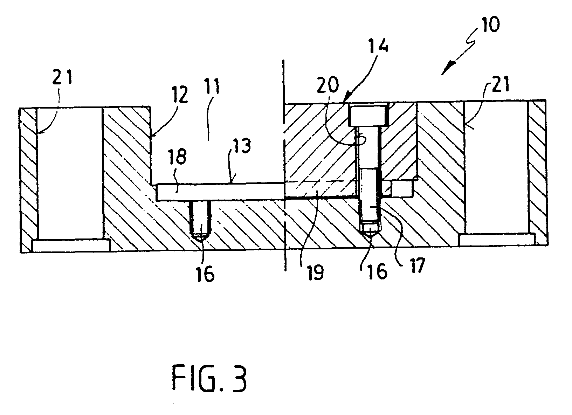

Fig. 3 einen Querschnitt entsprechend der in Fig. 1 mit III—III bezeichneten Schnittlinie, wobei das dort gezeigte Einsatzelement nur zur Hälfte dargestellt ist.

In den Zeichnungen ist die Formplatte insgesamt mit der Bezugsziffer 10 bezeichnet.

Die Formplatte 10 weist auf ihrer einer Formtrennebene zugewandten Breitseite eine sich über die gesamte Breitseite quer hinweg erstreckende gerade Aufnahme-Nut 11 auf, mit zwei Nutwänden 12 und einem Nutboden 13. Die Aufnahme-Nut 11 weist auf ihrer gesamten axialen Nutlänge $L_N$ einen gleichbleibenden Rechteckquerschnitt auf. An beiden Endseiten der Aufnahme-Nut 11 ist jeweils ein Einsatzelement 14, der welches den Nutquerschnitt bündig ausfüllt, in Aufnahme-Nut 11 eingesetzt. Die axiale Länge jedes Einsatzelementes 14 ist mit $L_E$ bezeichnet, während die Breite des axialen Einsatzelementes der Nutbreite $B_N$ entspricht. Der Abstand zwischen den geraden, ebenen und sich zum Nutboden 13 senkrecht erstreckenden inneren Seitenflächen 15 der Einsatzelemente 14 ist mit $L_F$ bezeichnet. Der Abstand $L_F$ bedeutet zugleich im wesentlichen die Länge eines nicht dargestellten, die artikel-bzw. formbildende Gravur enthaltenden Formeinsatzes.

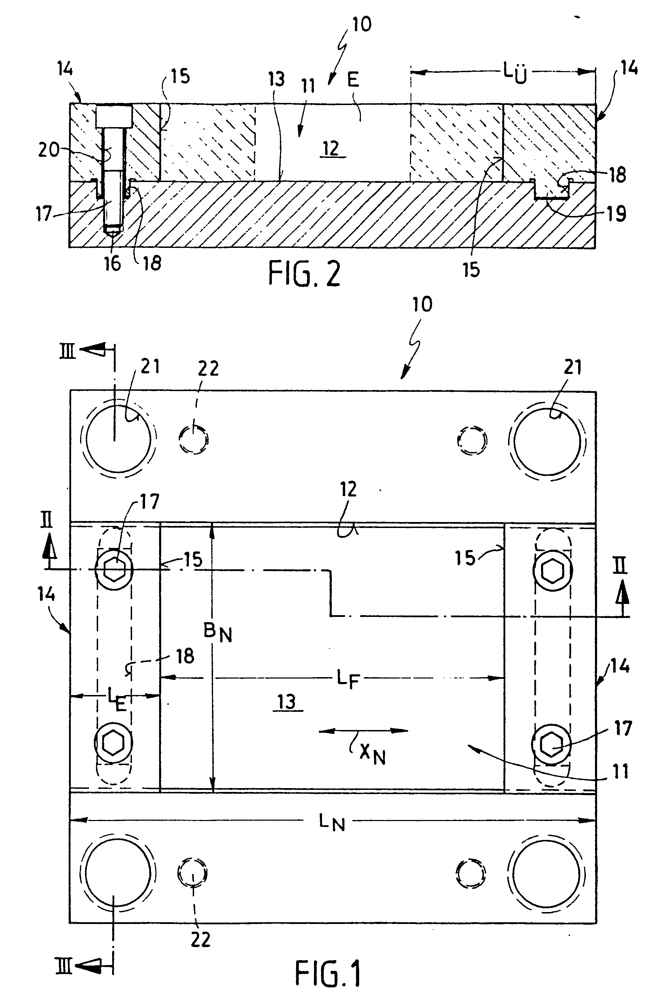

Wie aus der Zusammenschau der Fig. 1 und 2 ohne weiteres zu ersehen, begrenzen die frei sichtbaren Nutwände 12, der frei sichtbare Nutboden 13 sowie die inneren Seitenflächen 15 der Einsatzelemente 14 eine Einsenkung E, die der satten formschlüssigen Aufnahme des nicht dargestellten Formeinsatzes dient.

Zur Normalisierung der in den Zeichnungen dargestellten Formplatte 10 ist es möglich, gängige Formplattengrößen mit Aufnahme-Nuten 11 weniger unterschiedlicher Breiten bereitzuhalten, auf die sich der Formenbauer einstellen kann. Die Variabilität hinsichtlich unterschiedlicher Abmessungen des Formeinsatzes ist grundsätzlich durch die jeweilige axiale Länge $L_E$ eines Einsatzelementes 14 bzw. durch dessen Befestigungsposition bezüglich der mit $X_N$ bezeichneten Nutlängsrichtung gegeben.

Zur Erzielung dieser Variabilität können beispielsweise Einsatzelemente 14 unterschiedlicher axialer Länge $L_E$ bereitgestellt werden. In einem solchen Falle ist es möglich, die in den Zeichnungen dargestellte formplattenseitige Anordnung der Formschlußaufnahmen an den beiden Enden der Aufnahme-Nut 11 beizubehalten. Diese formplattenseitigen Formschlußaufnahmen bestehen zum einen aus vier im Nutboden 13 vorgesehenen Gewindebohrungen 16 zur Aufnahme des jeweiligen Gewindeteils von die Einsatzelemente durchsetzen Befestigungsschrauben 17. Zu den Formschlußaufnahmen zählen außerdem rinnenartige Ausnehmungen 18, die benachbart den beiden Enden der Aufnahme-Nut 11 in den Nutboden 13 eingelassen sind. In jede dieser Rinnen 18 greift ein an der Unterfläche eines Einsatzelementes 14 vorgesehener leistenförmiger Vorsprung 19 ein. Der leistenförmige Vorsprung 19 wird zugleich an zwei Stellen von Durchgangsbohrungen 20 zur Aufnahme der Befestigungsschrauben 17 durchsetzt.

Eine andere Variationsmöglichkeit besteht darin, daß auf der Basis praktischer Erfahrungen mit den Abmessungen von Formeinsätzen die Einsatzelemente 14 eine axiale Überlänge $L_ü$ aufweisen. Hierdurch erhält der Formenbauer die Möglichkeit, ein Einsatzelement 14 oder beide Einsatzelemente 14 um das durch den Formeinsatz vorgegebene Maß zu kürzen. Auch bei dieser Ausführungsform kann die nutendseitige Lage der formplattenseitigen Formschlußaufnahmen 16, 18 beibehalten werden.

Schließlich besteht eine Variationsmöglichkeit darin, den Formenbauer mit einer Formplatte 10 ohne Formschlußaufnahmen 16, 18 zu beliefern, so daß der Formenbauer die Möglichkeit erhält, Gewindebohrungen 16 und Rinnen 18 an den von ihm ausgewählten Stellen in den Nutboden 13 einzubringen. Da das Zerspanungsvolumen für die Formschlußaufnahmen relativ gering ist, ist in diesem Zusammenhang ein Spannungsverzug nicht relevant.

Die dargestellte Formplattennormalie 10 weist bereits Systembohrungen, und zwar Bohrungen 21 zur Aufnahme von Gleitbuchsen für Führungssäulen, und an der der Formtrennebene abgewandten Seite offene Gewindesacklöcher 22 zur Aufnahme von nicht dargestellten Zugschrauben auf, die der Verspannung eines aus mehreren Werkzeugplatten bestehenden Formplattenpakets dienen.

Die vorbeschriebene Aufnahme-Nut 11 läßt sich nicht nur bei Formplatten rechteckiger Grundform sondern ebenfalls auch bei Formplatten runder Grundform verwenden. Hierbei weisen allerdings die Einsatzelemente 14 an ihrem äußeren Randbereich jeweils eine teilkreisförmige Kontur auf.

Abweichend von den dargestellten Ausführungsformen ist es auch möglich, mehrere Aufnahmen-Nuten 11, insbesondere parallel nebeneinander, in einer einzigen Formplatte 10 vorzusehen.

Auch ist es möglich bei Einbringung entsprechender zusätzlicher nutbodenseitiger Formschlußaufnahen 16 18 ein usätzliches Einsatz, element 14, beispielsweise auf halber Nutlänge $L_N$, einzusetzen, so daß nicht nur eine Einsenkung E sondern zwei Einsenkungen E zur Aufnahme von zwei nicht dargestellten Formeinsätzen entstehen.

Nicht in den Zeichnungen dargestellt sind die Aufnahme-Nut 11 durchsetzende Auswerfer- oder Angußkanäle die der Formenbauer herstellt.

## Patentansprüche

1. Formplatte (10) für ein Spritzgießoder Preßwerkzeug zur Verarbeitung von Kunststoff- oder anderen plastischen Massen mit einer zur Formtrennebene hin offenen, sich über die gesamte Formplatte (10) hinweg erstreckenden geraden Aufnahme-Nut (11) mit gleichbleibendem Nutquerschnitt, die, in einem Einbaufeld zwischen randlich der Formplatte (10) angeordneten, diese quer durchsetzenden Systemöffnungen (21, 22), insbesondere Führungsbohrungen (21), angeordnet, der satten, formschlüssigen Aufnahme mindestens eines Formeinsatzes dient, der in der Aufnahme-Nut (11) an seinen beiden in Richtung ($X_n$ der Aufnahme-Nut (11) weisenden Seiten an je einem sich über den Querschnitt der Aufnahme-Nut (11) erstreckenden Anschlag (14) anliegt, der durch Befestigungsschrauben (17) an der Formplatte (10) gehalten ist, dadurch gekennzeichnet, daß die Anschläge (14) als in der Aufnahme-Nut (11) den Nutquerschnitt bündig ausfüllende Einsatzelemente mit einer die Länge ($L_F$) des Formeinsatzes gegenüber der Länge ($L_N$) der Aufnahme-Nut (11) ausgleichenden Gesamtlänge ($L_E$, $L_E$) ausgebildet sind.

2. Formplatte nach Anspruch 1, dadurch gekennzeichnet, daß die Aufnahme-Nut (11) einen rechteckigen Querschnitt aufweist.

3. Formplatte nach Anspruch 1 oder nach Anspruch 2, dadurch gekennzeichnet, daß die Einsatzelemente (14) an ihrer dem Nutboden (13) zugewandten Unterfläche mit mindestens einem Vorsprung (19) versehen sind, welcher in eine nutbodenseitig vorgesehene korrelierende Aussparung (18) satt eingreift.

4. Formplatte nach Anspruch 3, dadurch gekennzeichnet, daß der Vorsprung eine sich quer zur Nutlangsrichtung ($X_N$) erstreckende Leiste (19) bildet, während die nutbodenseitige korrelierende Aussparung als Rinne (18) ausgebildet ist.

5. Formplatte nach einem der Ansprüche 1 bis 4, dadurch gekennzeichnet, daß zur lösbaren Befestigung der Einsatzelemente (14) diese orthogonal zum Nutboden (13) durchsetzende Befestigungsschrauben (17) vorgesehen sind, welche in nutbodenseitige Gewindelöcher (16) eingreifen.

6. Formplatte nach einem der Ansprüche 3 bis 5, dadurch gekennzeichnet, daß die Befestigungs schrauben (17) zugleich die Vorsprünge (19) der Einsatzelemente (14) durchsetzen.

7. Formplatte nach einem der Ansprüche 1 bis 6, dadurch gekennzeichnet, daß die die nutbodenseitigen Aussparungen (18) zur Aufnahme der Vorsprünge (19) der Einsatzelemente (14) sowie die nutbodenseitigen Gewindelöcher (16) zur Aufnahme der Befestigungsschrauben (17) der Einsatzelemente (14) bezüglich der Nutlängsrichtung ($X_N$) in einer bestimmten Teilung vorgesehen sind, wobei die axiale Erstreckung der Einsatzelemente (14) eine Überlänge ($L_Ü$) bildet.

8. Formplatte nach Anspruch 7, dadurch gekennzeichnet, daß die die nutbodenseitigen Aussparungen (18) zur Aufnahme der Vorsprünge (19) der Einsatzelemente (14) sowie die nutbodenseitigen Gewindelöcher (16) zur Aufnahme der Befestigungsschrauben (17) der Einsatzelemente (14) bezüglich der Nutlängsrichtung ($X_N$) jeweils an zwei Stellen, und zwar an jeweils beiden Nutenden, vorgesehen sind.

## Revendications

1. Plaque porte-moule (10) pour moule de presse à injection ou de moulage de matières plastiques ou autres masses plastiques, avec une rainure (11) de réception ouverte vers le plan de séparation du moule et s'étendant sur la totalité de la plaque porte-moule (10) avec une section transversale invariable de rainure qui, disposée dans une zone de montage entre des ouvertures (21, 22) systématiques, en particulier des perçages de guidage (21), disposées en bordure de la plaque porte-moule (10), sert de logement sans jeu, par solidarisation dûe à la forme géométrique, à au moins une garniture formant moule qui épouse dans la rainure (11) de réception par chacun de ses deux côtés orientés dans la direction ($X_N$) de la rainure (11) de réception une butée (14) qui, s'étendant sur la section transversale de la rainure (11) de réception, est maintenue par des vis (17) de fixation sur la plaque porte-moule (10), caractérisée par le fait que les butées (14) sont réalisées sous la forme d'éléments d'insertion qui comblent sans jeu la section transversale dans la rainure (11) de réception et présentent une longueur ($L_E$, $L_E$) totale qui compense la longueur ($L_F$) de la garniture formant moule par rapport à la longueur ($L_N$) de la rainure (11) de réception.

2. Plaque porte-moule suivant la revendication 1, caractérisée par le fait que la rainure (11) de réception présente une section transversale rectangulaire.

3. Plaque porte-moule suivant la revendication 1, caractérisée par le fait que les éléments d'insertion (14) sont munis, sur la face inférieure orientée vers le fond (13) de la rainure, d'au moins une saillie (19) qui vient en prise sans jeu dans une réserve (18) en creux prévue en correspondance du côté fond de rainure.

4. Plaque porte-moule suivant la revendication 3, caractérisée par le fait que la saillie forme un listel (19) s'étendant dans le sens transversal au sens ($X_N$) longitudinal de la rainure, tandis que la réserve en creux prévue en correspondance côté fond de la rainure est réalisée sous la forme d'une gorge (18).

5. Plaque porte-moule suivant l'une des revendications 1 a 4, caractérisée par le fait que pour la fixation dissociable des éléments d'insertion (14) sont prévues des vis (17) de fixation qui traversent les premiers dans un sens orthogonal par rapport au fond (13) de rainure et viennent en prise dans des trous (16) taraudés côté fond de la rainure.

6. Plaque porte-moule suivant l'une des revendications 3 à 5, caractérisée par le fait que les vis (17) de fixation traversent en même temps les saillies (19) des éléments d'insertion (14).

7. Plaque porte-moule suivant l'une des revendications 1 à 6, caractérisée par le fait que les réserves (18) en creux côté fond de la rainure, pour recevoir les saillies (19) des éléments d'insertion (14), ainsi que les trous (16) taraudés côté fond de la rainure pour loger les vis (17) de fixation des éléments d'insertion (14), sont pratiqués selon un pas de division déterminé par rapport au sens longitudinal ($X_N$) de la rainure, tandis que l'extension axiale des éléments d'insertion (14) accuse une surcote ($L_Ü$) de longueur.

8. Plaque porte-moule suivant la revendication 7, caractérisée par le fait que les réserves (18) en creux côté fond de la rainure pour recevoir les saillies (19) des éléments d'insertion (14), ainsi que les trous (16) taraudés côté fond de la rainure pour loger les vis (17) de fixation des éléments d'insertiom (14) sont chaque fois pratiqués en deux endroits, et plus précisément à chacune des deux extrémités de la rainure par rapport au sens longitudinal ($X_N$) de la rainure.

**Claims**

1. Moulding plate (10) for an injection moulding or preesing tool for processing plastics or other plastic materials with a straight seating groove (11) with constant groove cross-section open towards a mould partition plane and extending over the entire moulding plate (10), said groove, which is provided within a mounting area between system openings (21, 22), in particular guide bores (21), arranged at the edge of moulding plate (10) and passing through the latter at right angles, and serves for close-fitting, positive reception of at least one mould insert abutting, in seating groove (11) at two sides facing in direction ($X_n$) of seating groove (11), one stop (14) each extending throughout the cross-section of seating groove (11), said stop being secured to moulding plate (10) by fastening screws (17), characterised in that the stops (14) are designed as insert elements filling, in flush manner, the groove cross-section of seating groove (11), and have a total length ($L_E$, $L_E$) compensating length ($L_F$) of the mould insert in relation to length ($L_N$) of seating groove (11).

2. Moulding plate according to claim 1, characterised in that seating groove (11) has a rectangular cross-section.

3. Moulding plate according to claim 1 or claim 2, characterised in that the insert units (14) are provided, at their underside facing groove bottom (13), with at least one projection (19), which engages, in close-fitting manner, a corresponding recess (18) provided in the groove bottom.

4. Moulding plate according tc claim 3, characterised in that the projection constitutes a strip (19) extending at right angles to the longitudinal direction ($X_N$) of the groove, the corresponding recess in the groove bottom being designed as channel (18).

5. Moulding plate according to one of claims 1 to 4, characterised in that for removable fastening of insert units (14) the latter are provided with fastening screws (17) passing at right angles through groove bottom (13), said fastening screws engaging threaded holes (16) in the bottom of the groove.

6. Moulding plate according to one of claims 3 to 5, characterised in that fastening screws (17) also pass through projections (19) of insert units (14).

7. Moulding plate according to one of claims 1 to 6, characterised in that recesses (18) in the groove bottom, which are intended to receive recesses (19) of insert units (14), and threaded holes (16) in the groove bottom, which are intended to receive fastening screws (17) of insert units (14), are provided subject to a certain disposition in respect of longitudinal direction of the groove ($X_N$), whereby the axial extent of insert units (14) constitutes an excess length ($L_Ü$).

8. Moulding plate according to claim 7, characterised in that recesses (18) in the groove bottom, which are intended to receive projections (19) of insert units (14), and threaded holes (16) in the groove bottom, which are intended to receive fastening screws (17) of insert units (14), are, in respect of longitudinal direction ($X_N$) of the groove, each prcvided at two points, that is to say at each of the two groove ends.

FIG. 2

FIG.1

1

FIG. 3